(19) Europäisches Patentamt
European Patent Office
Office européen des brevets

(11) **EP 3 425 916 A1**

(12) **EUROPEAN PATENT APPLICATION**

(43) Date of publication:
**09.01.2019 Bulletin 2019/02**

(51) Int Cl.:
**H04N 19/597** *(2014.01)*     **H04N 19/11** *(2014.01)*
**H04N 19/593** *(2014.01)*

(21) Application number: **18181914.5**

(22) Date of filing: **05.07.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2017   US 201762528545 P
22.12.2017   US 201715852392**

(71) Applicant: **Industrial Technology Research
Institute
Hsinchu 31040 Taiwan (TW)**

(72) Inventors:
• **LIN, Po-Han
  112 Taipei City (TW)**
• **LIN, Chun-Lung
  114 Taipei City (TW)**
• **LIN, Ching-Chieh
  105 Taipei City (TW)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD AND SYSTEM FOR INTRA PREDICTION IN IMAGE ENCODING**

(57)     A method and a system for intra prediction in image encoding are provided. The method used for performing an intra prediction of a target coding unit includes following steps. A first adjacent prediction direction of a first adjacent coding unit which is adjacent to the target adjacent coding unit is obtained. A second adjacent prediction direction of a second adjacent coding unit which is adjacent to the target adjacent coding unit is obtained. The second adjacent coding unit is different from the first adjacent coding unit. A plurality of target prediction values of a plurality of target pixels are obtained from the first adjacent coding unit and the second adjacent coding unit at least according to the first adjacent prediction direction and the second adjacent prediction direction.

FIG. 1

**Description**

TECHNICAL FIELD

The disclosure relates in general to a method and a system for intra prediction in image encoding.

BACKGROUND

Along with the development of the computer, network communication and display, 360 degree panoramic video having high dynamic range and virtual reality function is more and more widely used. In order to get a good user experience, the resolution of these videos is usually very high. Moreover, if the user uses a head-mounted display to play the 360 degree panoramic video, the distance between the eyes and the display is close, such that the picture becomes rough and the user's viewing experience is affected. Therefore, in order to make the display finer, the resolution of the display becomes high, and the display refresh rate is raised to 30 to 90, as such the data transmission becomes large. Thus, it is needed to invent an image encoding method having high compression efficiency in order to meet the needs of the future.

SUMMARY

The disclosure is directed to a method and a system for intra prediction in image encoding.
According to one embodiment, a method for intra prediction in image encoding is provided. The method is for performing an intra prediction of a target coding unit. The method includes the following steps. A first adjacent prediction direction of a first adjacent coding unit which is adjacent to the target coding unit is obtained. A second adjacent prediction direction of a second adjacent coding unit which is adjacent to the target coding unit is obtained. The second adjacent coding unit is different from the first adjacent coding unit. A plurality of target prediction values of a plurality of target pixels of the target coding unit is obtained from the first adjacent coding unit and the second adjacent coding unit at least according to the first adjacent prediction direction and the second adjacent prediction direction.
According to another embodiment, a system for intra prediction in image encoding is provided. The system is for performing an intra prediction of a target coding unit. The system includes a direction unit and a prediction unit. The direction unit is for obtaining a first adjacent prediction direction of a first adjacent coding unit which is adjacent to the target coding unit and obtaining a second adjacent prediction direction of a second adjacent coding unit which is adjacent to the target coding unit. The second adjacent coding unit is different from the first adjacent coding unit. The prediction unit is for obtaining a plurality of target prediction values of a plurality of target pixels of the target coding unit from the first adjacent coding unit and the second adjacent coding unit at least according to the first adjacent prediction direction and the second adjacent prediction direction.

BRIEF DESCRIPTION OF THE DRAWINGS

FIG. 1 illustrates an intra prediction in image encoding.

FIG. 2 shows a panoramic image.

FIG. 3 shows a system for intra prediction in image encoding according to one embodiment.

FIG. 4 shows a flowchart of a method for intra prediction in image encoding according to one embodiment.

FIGS. 5 to 6 illustrate the steps in FIG. 4.

FIG. 7 illustrates the step S134 according to one embodiment.

FIG. 8 illustrates the step S134 according to another embodiment.

FIG. 9 shows a system for intra prediction in image encoding according to another embodiment.

FIG. 10 shows a flowchart of a method for intra prediction in image encoding according to one embodiment.

FIG. 11 illustrates the step S230 of FIG. 10.

FIG. 12 shows a system for intra prediction in image encoding according to another embodiment.

FIG. 13 shows a flowchart of a method for intra prediction in image encoding according to another embodiment.

FIG. 14 illustrates the step S330 in FIG. 12.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION

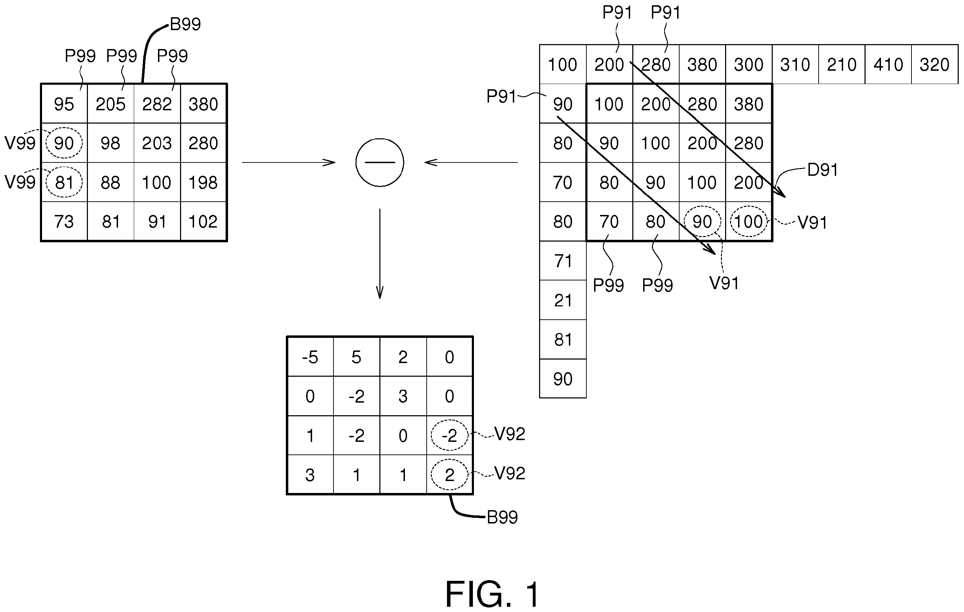

Please refer to FIG. 1, which illustrates an intra prediction in image encoding. In the intra prediction, a plurality of original values V99 of a plurality of target pixels P99 in a target coding unit B99 are provided. A plurality of target prediction values V91 of the target pixels P99 in the target coding unit B99 are obtained from a plurality of adjacent pixels P91 according to a predetermined prediction direction D91. The target prediction values V91 are also called as prediction block.

Next, differences between the original values V99 and the target prediction values V91 are calculated to obtain a plurality of residual values V92 of the target coding unit B99. The residual values V92 are also called as residual block. As shown in FIG. 1, the number of bits of each residual value V92 is low, so the compression efficiency is improved.

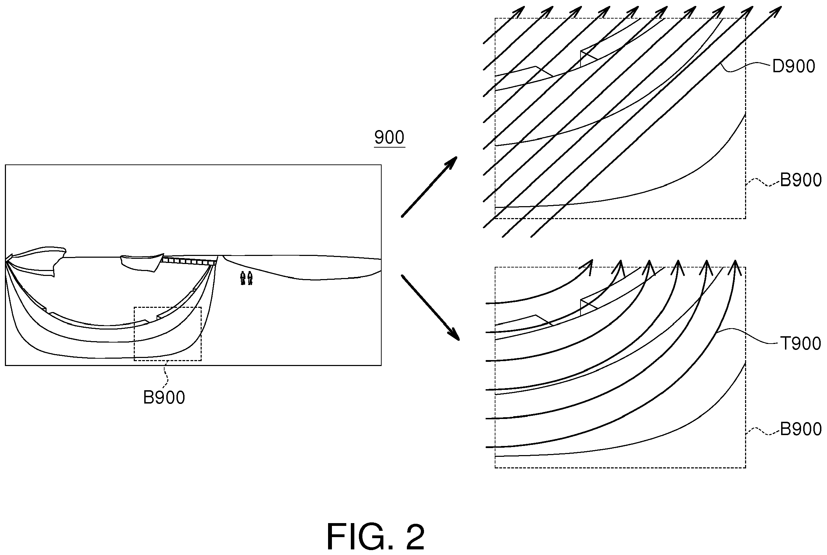

Please refer to FIG. 2, which shows a panoramic image 900. In the panoramic image 900, part of the content is bent. Referring to the block B900 at the lower right corner, texture T900 in the block B900 is bent. Referring to the block B900 at the upper right corner, a predetermined prediction direction D900 is greatly different from the texture T900, so the compression efficiency may be affected.

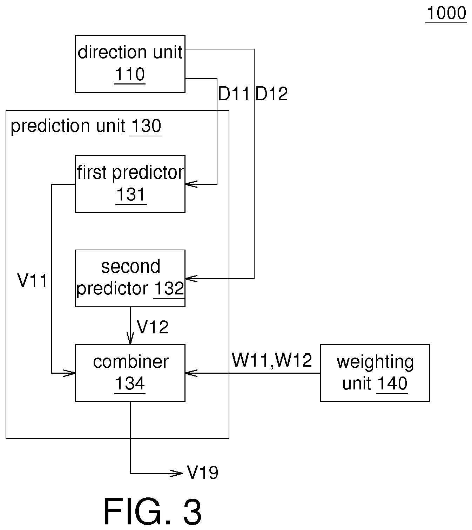

Please refer to FIG. 3, which shows a system 1000 for intra prediction in image encoding according to one embodiment. The system 1000 includes a direction unit 110, a prediction unit 130 and a weighting unit 140. The direction unit 110 is used for obtaining a prediction direction. The prediction unit 130 is used for performing the intra prediction. The weighting unit 140 is used for providing weightings. Each of the direction unit 110, the prediction unit 130 and the weighting unit 140 may be a chip, a circuit, a circuit board, or a non-transitory computer readable medium. The system 1000 can improve the compression efficiency via muti-prediction direction technology. The operation of those elements is illustrated via a flowchart.

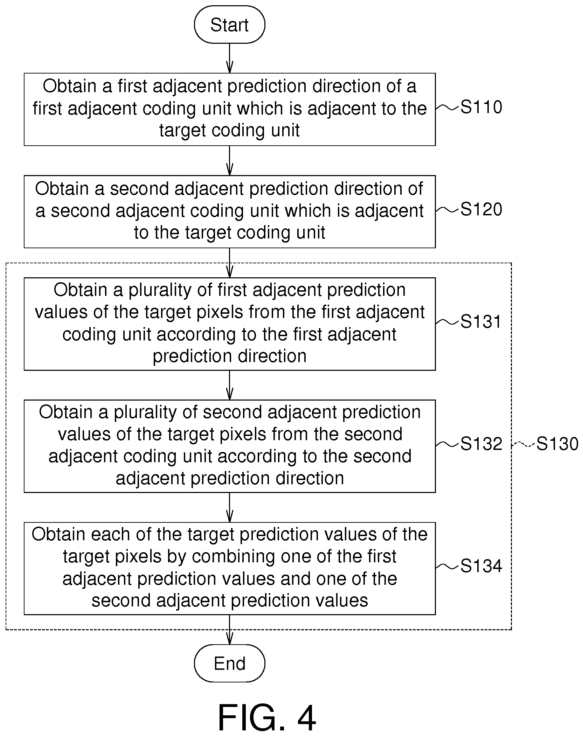

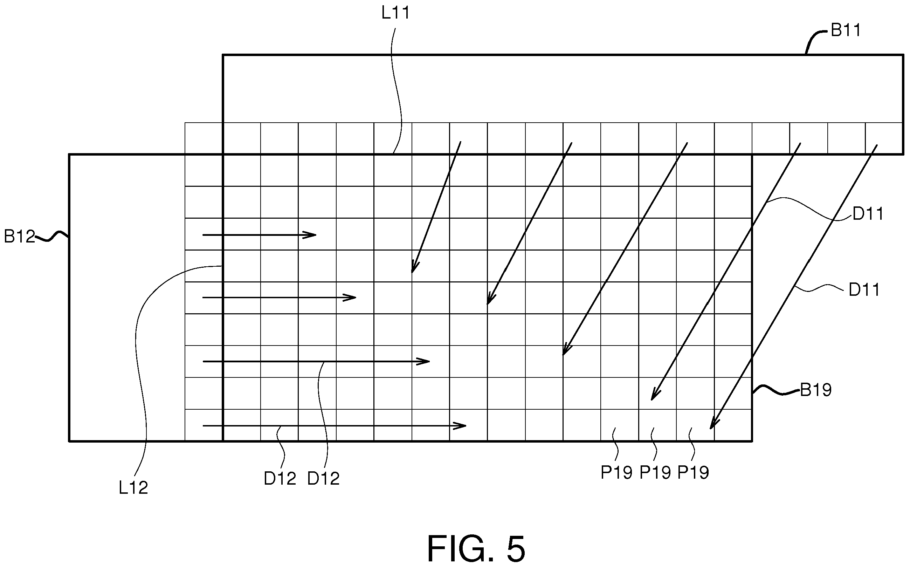

Please refer FIGS. 4 to 6. FIG. 4 shows a flowchart of a method for intra prediction in image encoding according to one embodiment, and FIGS. 5 to 6 illustrate the steps in FIG. 4. As shown in FIG. 5, the system 1000 performs the intra prediction for a target coding unit B19. In step S110, the direction unit 110 obtains a first adjacent prediction direction D11 of a first adjacent coding unit B11 which is adjacent to the target coding unit B19. The first adjacent coding unit B11 is composed of a plurality of columns and a plurality of rows. The first adjacent coding unit B11 has been performed the intra prediction, and the first adjacent prediction direction D11 is mainly used for the intra prediction.

Then, in step S120, the direction unit 110 obtains a second adjacent prediction direction D12 of a second adjacent coding unit B12 which is adjacent to the target coding unit B19. The second adjacent coding unit B12 is different from the first adjacent coding unit B11. The second adjacent coding unit B12 is composed of a plurality of columns and a plurality of rows. The second adjacent coding unit B12 has been performed the intra prediction, and the second adjacent prediction direction D12 is mainly used for the intra prediction.

As shown in FIG. 5, the first adjacent coding unit B11 is located at a first side L11 of the target coding unit B19, and the second adjacent coding unit B12 is located at a second side L12 of the target coding unit B19. The first side L11 is connected to the second side L12.

The sequence of the step S110 and the step S120 is not limited to the embodiment of FIG. 4. In one embodiment, the S120 can be performed before the step S110. Or, the step S110 and the step S120 can be performed at the same time.

Next, in step S130, the prediction unit 130 obtains a plurality of target prediction values V19 (shown in FIG. 3) of a plurality of target pixels P19 of the target coding unit B19 from the first adjacent coding unit B11 and the second adjacent coding unit B12 at least according to the first adjacent prediction direction D11 and the second adjacent prediction direction D12.

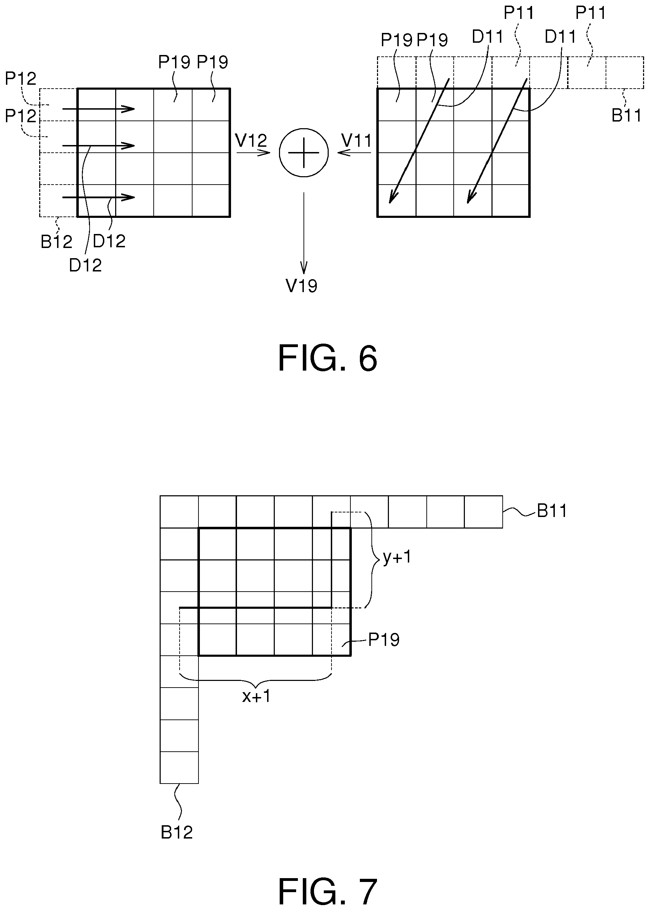

In the embodiment of FIG. 4, the step S130 includes steps S131, S132, S134. In step S131, a first predictor 131 of the prediction unit 130 obtains a plurality of first adjacent prediction values V11 of the target pixels P19 from the first adjacent coding unit B11 according to the first adjacent prediction direction D11. For example, referring to right portion of FIG. 6, the first predictor 131 may copy the pixel values of a plurality of adjacent pixels P11 of the first adjacent coding unit B11 to the target pixels P19 along the first adjacent prediction direction D11 to obtain the first adjacent prediction values V11 of the target pixels P19. It is noted that the content copied by the first predictor 131 is related to the first adjacent prediction direction D11. The content copied by the first predictor 131 may be the content of the second adjacent coding unit B12 located at the left side.

Afterwards, in step S132, a second predictor 132 of the prediction unit 130 obtains a plurality of second adjacent prediction values V12 of the target pixels P19 from the second adjacent coding unit B12 according to the second adjacent prediction direction D12. For example, referring to left portion of FIG. 6, the second predictor 132 may copy the pixel values of a plurality of adjacent pixels P12 of the second adjacent coding unit B12 to the target pixels P19 along the second adjacent prediction direction D12 to obtain the second adjacent prediction values V12 of the target pixels P19. It is noted that the content copied by the second predictor 132 is related to the second adjacent prediction direction D12. The content copied by the second predictor 132 may be the content of the first adjacent coding unit B11 located at the right side.

The sequence of the step S131 and the step S132 is not limited to the embodiment of FIG. 4. In one embodiment, the step S132 may be performed before the step S131. Or, the step S131 and the step S132 may be performed at the same time.

Then, in step S134, the combiner 134 of the prediction unit 130 obtains each of the target prediction values V19 of the target pixels P19 by combining one of the first adjacent prediction values V11 and one of the second adjacent prediction values V12. For example, the combiner 134 obtains each of the target prediction values V19 according to the equation (1).

$$V19(x,y) = W11(x,y) * V11(x,y) + W12(x,y) * V12(x,y),$$

$$W11(x,y) = f1(x,y,V11(x,y),V12(x,y)),$$

$$W12(x,y) =$$
$$g1(x,y,V11(x,y),V12(x,y))\dots\dots\dots\dots\dots\dots\dots\dots\dots\dots\dots\dots\dots\dots\dots\dots(1)$$

The combiner 134 obtains each of the target prediction values V19 by summing up a product of one of the first adjacent prediction values V11 and one of a plurality of first weightings W11 and a product of one of the second adjacent prediction values V12 and one of a plurality of second weightings W12. In one embodiment, the first weightings W11 are different from the second weightings W12. The first weightings W11 and the second weightings W12 are provided by the weighting unit 140.

As shown in equation (1), the first weighting W11 corresponding to one target pixel P19 is a function of the location, the first adjacent prediction value V11 and the second adjacent prediction value V12, and is changed with the location. The second weighting W12 corresponding to the target pixel P19 is a function of the location, the first adjacent prediction value V11 and the second adjacent prediction value V12, and is changed with the location.

For example, refer please to FIG. 7. FIG. 7 illustrates the step S134 according to one embodiment. In one embodiment, the combiner 134 obtains the target prediction values V19 according to the equation (2).

$$V19(x,y) = \left(\frac{(x+1)}{(x+1)+(y+1)}\right) * V11(x,y) + \left(\frac{(y+1)}{(x+1)+(y+1)}\right) * V12(x,y)\dots\dots\dots\dots\dots(2)$$

In the equation (2), the first weighting W11 is $\left(\frac{(x+1)}{(x+1)+(y+1)}\right)$, and the second weighting W12 is $\left(\frac{(y+1)}{(x+1)+(y+1)}\right)$. That is to say, if the target pixel P19 is far away from the first adjacent coding unit B11, (y+1) is large and the first weighting W11 $\left(\frac{(x+1)}{(x+1)+(y+1)}\right)$ is small; if the target pixel P19 is near to the first adjacent coding unit

4

B11, (y+1) is small and the first weighting W11 $\left(\dfrac{(x+1)}{(x+1)+(y+1)}\right)$ is large.

If the target pixel P19 is far away from the second adjacent coding unit B12, (x+1) is large and the second weighting W12 $\left(\dfrac{(y+1)}{(x+1)+(y+1)}\right)$ is small; if the target pixel P19 is near to the second adjacent coding unit B12, (x+1) is small and the second weighting W12 $\left(\dfrac{(y+1)}{(x+1)+(y+1)}\right)$ is large.

Therefore, during the calculation of the target prediction value V19, if the target pixel P19 is near to the first adjacent coding unit B11, the target prediction value V19 is highly related to the first adjacent prediction value V11; if the target pixel P19 is near to the second adjacent coding unit B12, the target prediction value V19 is highly related to the second adjacent prediction value V12.

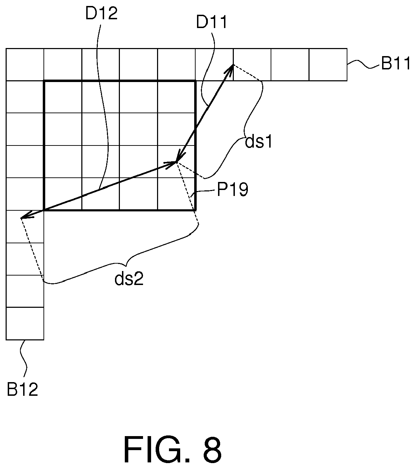

Moreover, please refer to FIG. 8, which illustrates the step S134 according to another embodiment. Along the first adjacent prediction direction D11, a first distance ds1 between the target pixel P19 and the first adjacent coding unit B11 is measured. Along the second adjacent prediction direction D12, a second distance ds2 between the target pixel P19 and the second adjacent coding unit B12 is measured. In another embodiment, the combiner 134 obtains the target prediction values V19 according to the equation (3).

$$V19(x,y) = \left(\frac{ds2}{ds1+ds2}\right) * V11(x,y) + \left(\frac{ds1}{ds1+ds2}\right) * V12(x,y)\dots\dots\dots\dots\dots\dots\dots\dots(3)$$

In the equation (3), the first weighting W11 is $\left(\dfrac{ds2}{ds1+ds2}\right)$, and the second weighting W12 is $\left(\dfrac{ds1}{ds1+ds2}\right)$. That is to say, if the first distance ds1 between the target pixel P19 and the first adjacent coding unit B11 is large, the first weighting W11 $\left(\dfrac{ds2}{ds1+ds2}\right)$ is small; if the first distance ds1 between the target pixel P19 and the first adjacent coding unit B11 is small, the first weighting W11 $\left(\dfrac{ds2}{ds1+ds2}\right)$ is large.

If the second distance ds2 between the target pixel P19 and the second adjacent coding unit B12 is large, the second weighting W12 $\left(\dfrac{ds1}{ds1+ds2}\right)$ is small; if the second distance ds2 between the target pixel P19 and the second adjacent coding unit B12 is small, the second weighting W12 $\left(\dfrac{ds1}{ds1+ds2}\right)$ is large.

Therefore, during the calculation of the target prediction value V19, if the target pixel P19 is near to the first adjacent coding unit B11, the target prediction value V19 is highly related to the first adjacent prediction value V11; if the target pixel P19 is near to the second adjacent coding unit B12, the target prediction value V19 is highly related to the second adjacent prediction value V12.

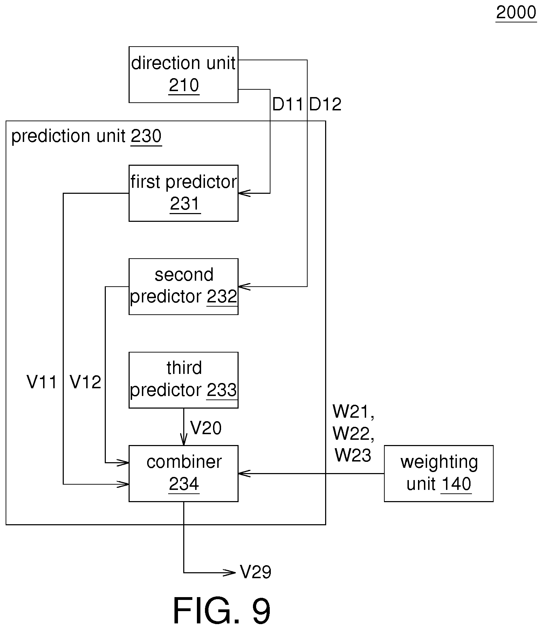

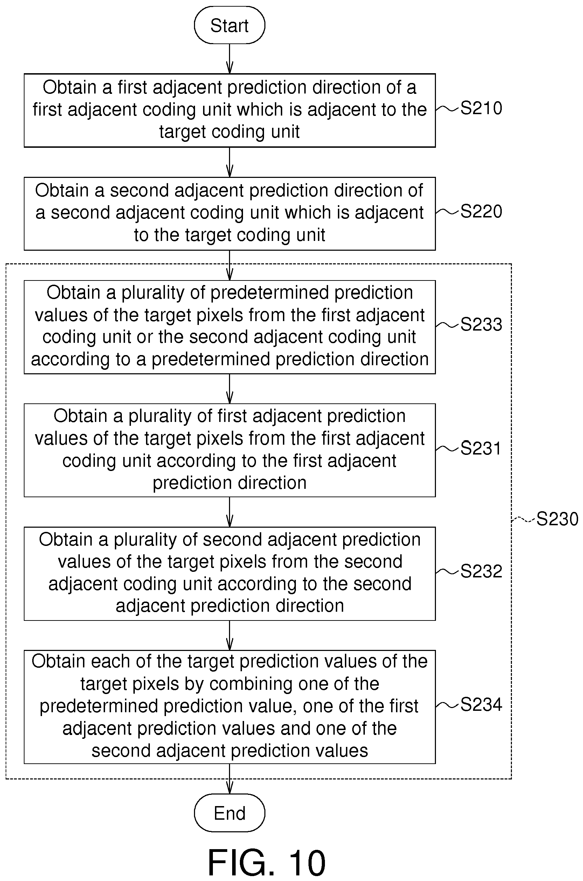

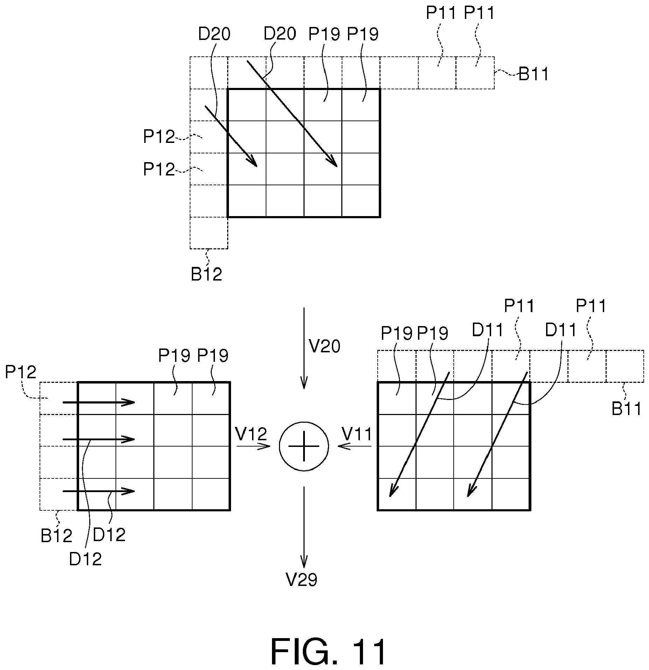

Except the first adjacent prediction direction D11 and the second adjacent prediction direction D12, a predetermined prediction direction D20 can be used for intra prediction. Please refer FIGS. 9 to 11. FIG. 9 shows a system 2000 for intra prediction in image encoding according to another embodiment, FIG. 10 shows a flowchart of a method for intra prediction in image encoding according to one embodiment, and FIG. 11 illustrates the step S230 of FIG. 10. In steps S210, S220, the direction unit 210 obtains the first adjacent prediction direction D11 and the second adjacent prediction direction D12. The steps S210, S220 are similar to the steps S110, S120, and similarities are not repeated here.

The step S230 includes steps S233, S231, S232, S234. In step S233, a third predictor 233 of a prediction unit 230 obtains a plurality of predetermined prediction values V20 of the target pixels P19 from the first adjacent coding unit B11 and/or the second adjacent coding unit B12 according to the predetermined prediction direction D20. The predetermined prediction direction D20 is preset for the whole image and is unchanged during the calculation. For example, referring to upper portion of FIG. 11, the third predictor 233 may copy the pixel values of the first adjacent coding unit B11 and/or second adjacent coding unit B12 to the target pixels P19 along the predetermined prediction direction D20 to obtain the predetermined prediction values V20 of the target pixels P19.

Next, in step S231, a first predictor 231 of the prediction unit 230 obtains the first adjacent prediction values V11 of the target pixels P19 from the first adjacent coding unit B11 according to the first adjacent prediction direction D11. For example, referring to right portion of FIG. 11, the first predictor 231 can copy the pixel values of the adjacent pixels P11 of the first adjacent coding unit B11 to the target pixels P19 along the first adjacent prediction direction D11 to obtain the first adjacent prediction values V11.

Then, in step S232, a second predictor of the prediction unit 230 obtains the second adjacent prediction values V12 of the target pixels P19 from the second adjacent coding unit B12 according to the second adjacent prediction direction D12. For example, referring to left portion of FIG. 11, the second predictor 232 can copy the pixel values of the adjacent pixels P12 of the second adjacent coding unit B12 to the target pixels P19 along the second adjacent prediction direction D12 to obtain the second adjacent prediction values V12.

Afterwards, in step S234, a combiner 234 of the prediction unit 230 obtains each of the target prediction values V29 of the target pixels P19 by combining one of the predetermined prediction value V20, one of the first adjacent prediction values V11 and one of the second adjacent prediction values V12. For example, the combiner 234 obtains the target prediction values V29 according to the equation (4).

$$V29(x, y) = W21(x, y) * V11(x, y) + W22(x, y) * V12(x, y) + W23(x, y) * V20(x, y),$$

$$W21(x, y) = f2(x, y, V11(x, y), V12(x, y), V20(x, y)),$$

$$W22(x, y) = g2(x, y, V11(x, y), V12(x, y), V20(x, y)),$$

$$W23(x, y) = h2(x, y, V11(x, y), V12(x, y), V20(x, y)) \dots\dots\dots\dots\dots\dots\dots\dots\dots\dots\dots (4)$$

The combiner 234 obtains each of the target prediction values V29 by summing up a product of one of the first adjacent prediction values V11 and one of a plurality of first weightings W21, a product of one of the second adjacent prediction values V12 and one of a plurality of second weightings W22, and a product of one of the predetermined prediction values V20 and one of a plurality of third weightings W23. The first weightings W21, the second weightings W22 and the third weightings W23 are different. The first weightings W21, the second weightings W22 and the third weightings W23 are provided by a weighting unit 240.

As shown in equation (4), the first weighting W21 corresponding to one target pixel P19 is a function of the location, the first adjacent prediction value V11, the second adjacent prediction value V12 and the predetermined prediction value V20, and is changed with the location. The second weighting W22 corresponding to one target pixel P19 is a function of the location, the first adjacent prediction value V11, the second adjacent prediction value V12 and the predetermined prediction value V20, and is changed with the location. The third weighting W23 corresponding to one target pixel P19 is a function of the location, the first adjacent prediction value V11, the second adjacent prediction value V12 and the predetermined prediction value V20, and is changed with the location.

That is to say, expect the first adjacent prediction direction D11 and the second adjacent prediction direction D12, the prediction unit 230 can perform the intra prediction according to the predetermined prediction direction D20.

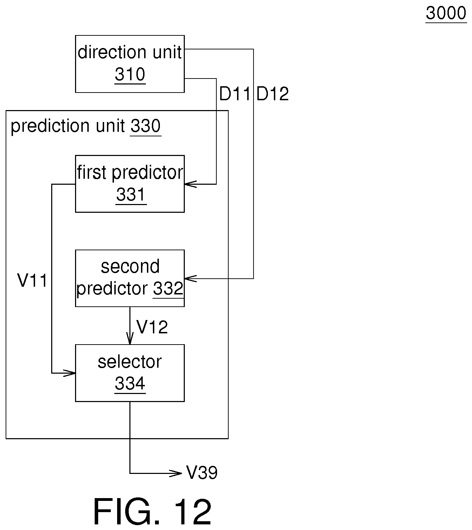

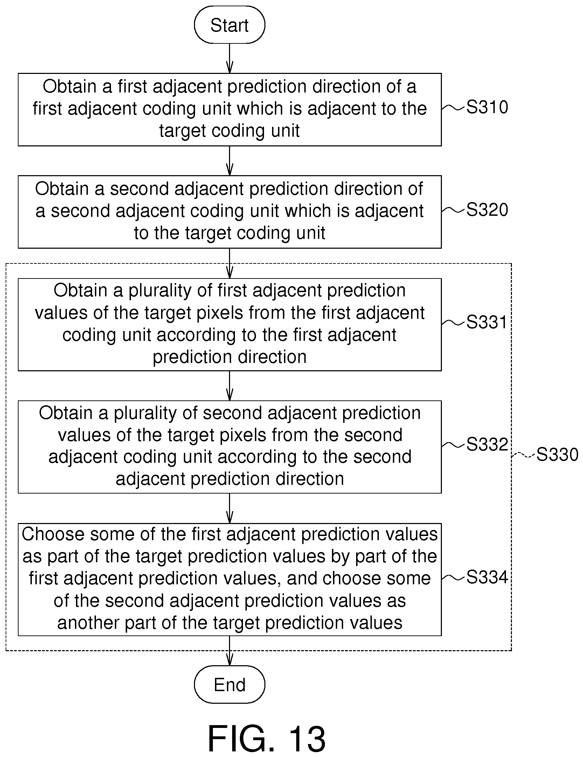

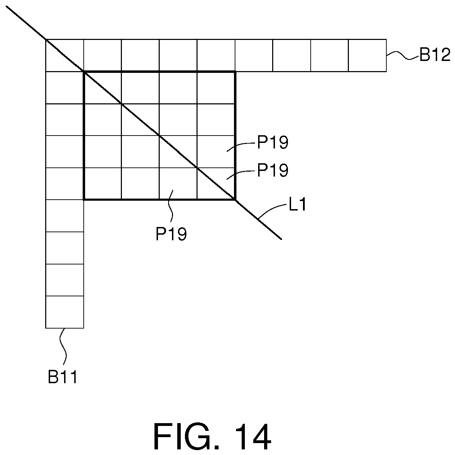

Furthermore, in another embodiment, expect the combination the intra prediction can be performed via selection. Please refer to FIGS. 12 to 14. FIG. 12 shows a system 3000 for intra prediction in image encoding according to another embodiment, FIG. 13 shows a flowchart of a method for intra prediction in image encoding according to another embodiment, and FIG. 14 illustrates the step S330 in FIG. 12. In steps S310 and S320, a direction unit 310 obtains the first adjacent prediction direction D11 and the second adjacent prediction direction D12. The steps S310, S320 are similar to the steps S110, S120.

The step S330 includes steps S331, S332, S334. In step S331, a first predictor 331 of the prediction unit 330 obtains the first adjacent prediction values V11 of the target pixels P19 from the first adjacent coding unit B11 according to the first adjacent prediction direction D11.

Then, in step S332, a second predictor 332 of the prediction unit 330 obtains the second adjacent prediction values V12 of the target pixels P19 from the second adjacent coding unit B12 according to the second adjacent prediction direction D12.

Afterwards, in step S334, a selector 334 of the prediction unit 230 chooses some of the first adjacent prediction values V11 as part of the target prediction values V39 of the target pixels P19, and chooses some of the second adjacent prediction values V12 as another part of the target prediction values V39 of the target pixels P19. For example, the selector 334 obtains the target prediction values V39 according to the equation (5).

$$V39(x,y) = \begin{cases} V11(x,y) & , \text{if } x > y \\ \frac{V11(x,y)+V12(x,y)}{2} & , \text{if } x = y \\ V12(x,y) & , \text{if } x < y \end{cases} \quad \ldots\ldots\ldots\ldots\ldots\ldots\ldots\ldots\ldots\ldots\ldots\ldots\ldots\ldots (5)$$

If the target pixel P19 is near to the first adjacent coding unit B11, the selector 334 chooses the first adjacent prediction value V11 as the target prediction value V39 (shown in FIG. 12); if the target pixel P19 is near to the second adjacent coding unit B12, the selector 334 chooses the second adjacent prediction value V12 as the target prediction value V39; if the target pixel P19 is located at a slant axis L1, the selector 334 chooses the average of the first adjacent prediction value V11 and the second adjacent prediction value V12 as the target prediction value V39.

That is to say, expect the combination, the prediction unit 330 can perform the intra prediction via the selection.

According to the embodiments described above, the muti-prediction direction technology is used in the intra prediction to improve the compression efficiency of the panoramic image in order to meet the needs of the future.

It will be apparent to those skilled in the art that various modifications and variations can be made to the disclosed embodiments. It is intended that the specification and examples be considered as exemplary only, with a true scope of the disclosure being indicated by the following claims and their equivalents.

**Claims**

1. A method for intra prediction in image encoding, for performing an intra prediction of a target coding unit (B19), the method comprising:

   obtaining a first adjacent prediction direction (D11) of a first adjacent coding unit (B11) which is adjacent to the target coding unit (B19);
   obtaining a second adjacent prediction direction (D12) of a second adjacent coding unit (B12) which is adjacent to the target coding unit (B19), wherein the second adjacent coding unit (B12) is different from the first adjacent coding unit (B11); and
   obtaining a plurality of target prediction values (V19) of a plurality of target pixels (P19) of the target coding unit (B19) from the first adjacent coding unit (B11) and the second adjacent coding unit (B12) at least according to the first adjacent prediction direction (D11) and the second adjacent prediction direction (D12).

2. The method for intra prediction in image encoding according to claim 1, wherein the step of obtaining the target prediction values of the target coding unit includes:

   obtaining a plurality of first adjacent prediction values of the target pixels from the first adjacent coding unit according to the first adjacent prediction direction;
   obtaining a plurality of second adjacent prediction values of the target pixels from the second adjacent coding unit according to the second adjacent prediction direction; and
   obtaining each of the target prediction values of the target pixels by combining one of the first adjacent prediction values and one of the second adjacent prediction values.

3. The method for intra prediction in image encoding according to claim 2, wherein in the step of obtaining each of the target prediction values of the target pixels by combining one of the first adjacent prediction values and one of the second adjacent prediction values, each of the target prediction values is obtained by summing up a product of one of the first adjacent prediction values and one of a plurality of first weightings and a product of one of the second adjacent prediction values and one of a plurality of second weightings.

4. The method for intra prediction in image encoding according to claim 3, wherein not all of the first weightings corresponding to the target pixels are identical, and not all of the second weightings corresponding to the target pixels are identical.

5. The method for intra prediction in image encoding according to claim 1, wherein the step of obtaining the target prediction values of the target coding unit includes:

   obtaining a plurality of predetermined prediction values of the target pixels from the first adjacent coding unit or the second adjacent coding unit according to a predetermined prediction direction;

obtaining a plurality of first adjacent prediction values of the target pixels from the first adjacent coding unit according to the first adjacent prediction direction;

obtaining a plurality of second adjacent prediction values of the target pixels from the second adjacent coding unit according to the second adjacent prediction direction; and

obtaining each of the target prediction values of the target pixels by combining one of the predetermined prediction values, one of the first adjacent prediction values and one of the second adjacent prediction values.

6. The method for intra prediction in image encoding according to claim 5, wherein in the step of obtaining each of the target prediction values of the target pixels by combining one of the predetermined prediction values, one of the first adjacent prediction values and one of the second adjacent prediction values, each of the target prediction values is obtained by summing up a product of one of the predetermined prediction values and one of a plurality of third weightings, a product of one of the first adjacent prediction values and one of a plurality of first weightings and a product of one of the second adjacent prediction values and one of a plurality of second weightings.

7. The method for intra prediction in image encoding according to claim 6, wherein not all of the third weightings corresponding to the target pixels are identical, not all of the first weightings corresponding to the target pixels are identical, and not all of the second weightings corresponding to the target pixels are identical.

8. The method for intra prediction in image encoding according to claim 6, wherein each of the third weightings is related to a location of one of the target pixels, each of the first weightings is related to the location of one of the target pixels, and each of the second weightings is related to the location of one of the target pixels.

9. The method for intra prediction in image encoding according to claim 6, wherein each of the third weightings is related to one of the predetermined prediction values, one of the first adjacent prediction values and one of the second adjacent prediction values, each of the first weightings is related to one of the predetermined prediction values, one of the first adjacent prediction values and one of the second adjacent prediction values, and each of the second weightings is related to one of the predetermined prediction values, one of the first adjacent prediction values and one of the second adjacent prediction values.

10. The method for intra prediction in image encoding according to claim 1, wherein the step of obtaining the target prediction values of the target coding unit includes:

obtaining a plurality of first adjacent prediction values of the target pixels from the first adjacent coding unit according to the first adjacent prediction direction;

obtaining a plurality of second adjacent prediction values of the target pixels from the second adjacent coding unit according to the second adjacent prediction direction; and

choosing some of the first adjacent prediction values as part of the target prediction values, and choosing some of the second adjacent prediction values as another part of the target prediction values.

11. The method for intra prediction in image encoding according to claim 1, wherein the first adjacent coding unit is located at a first side of the target coding unit, the second adjacent coding unit is located at a second side of the target coding unit.

12. The method for intra prediction in image encoding according to claim 11, wherein the first side is connected to the second side.

13. A system for intra prediction in image encoding, for performing an intra prediction of a target coding unit (B19), the system comprising:

a direction unit (110) for obtaining a first adjacent prediction direction (D11) of a first adjacent coding unit (B11) which is adjacent to the target coding unit (B19) and obtaining a second adjacent prediction direction (D12) of a second adjacent coding unit (B12) which is adjacent to the target coding unit (B19), wherein the second adjacent coding unit (B12) is different from the first adjacent coding unit (B11); and

a prediction unit (130) for obtaining a plurality of target prediction values (V19) of a plurality of target pixels (P19) of the target coding unit (B19) from the first adjacent coding unit (B11) and the second adjacent coding unit (B12) at least according to the first adjacent prediction direction (D11) and the second adjacent prediction direction (D12).

**14.** The system for intra prediction in image encoding according to claim 13, wherein the prediction unit includes:

a first predictor for obtaining a plurality of first adjacent prediction values of the target pixels from the first adjacent coding unit according to the first adjacent prediction direction;
a second predictor for obtaining a plurality of second adjacent prediction values of the target pixels from the second adjacent coding unit according to the second adjacent prediction direction;
a combiner for obtaining each of the target prediction values of the target pixels by combining one of the first adjacent prediction values and one of the second adjacent prediction values; and
a weighting unit for providing a plurality of first weightings and a plurality of second weightings for the target pixels;
wherein the combiner obtains each of the target prediction values by summing up a product of one of the first adjacent prediction values and one of a plurality of first weightings and a product of one of the second adjacent prediction values and one of a plurality of second weightings; and
not all of the first weightings corresponding to the target pixels are identical; and
not all of the second weightings corresponding to the target pixels are identical.

**15.** The system for intra prediction in image encoding according to claim 13, wherein the prediction unit includes:

a first predictor for obtaining a plurality of first adjacent prediction values of the target pixels from the first adjacent coding unit according to the first adjacent prediction direction;
a second predictor for obtaining a plurality of second adjacent prediction values of the target pixels from the second adjacent coding unit according to the second adjacent prediction direction;
a third predictor for obtaining a plurality of predetermined prediction values of the target pixels from the first adjacent coding unit or the second adjacent coding unit according to a predetermined prediction direction;
a combiner for obtaining each of the target prediction values of the target pixels by combining one of the predetermined prediction values, one of the first adjacent prediction values and one of the second adjacent prediction values; and
a weighting unit for providing a plurality of first weightings, a plurality of second weightings and a plurality of third weightings for the target pixels;
wherein the combiner obtains each of the target prediction values by summing up a product of one of the predetermined prediction values and one of a plurality of third weightings, a product of one of the first adjacent prediction values and one of a plurality of first weightings and a product of one of the second adjacent prediction values and one of a plurality of second weightings.

**16.** The system for intra prediction in image encoding according to claim 15, wherein not all of the third weightings corresponding to the target pixels are identical, not all of the first weightings corresponding to the target pixels are identical, and not all of the second weightings corresponding to the target pixels are identical.

**17.** The system for intra prediction in image encoding according to claim 15, wherein each of the third weightings is related to a location of one of the target pixels, each of the first weightings is related to the location of one of the target pixels, and each of the second weightings is related to the location of one of the target pixels.

**18.** The system for intra prediction in image encoding according to claim 15, wherein each of the third weightings is related to one of the predetermined prediction values, one of the first adjacent prediction values and one of the second adjacent prediction values, each of the first weightings is related to one of the predetermined prediction values, one of the first adjacent prediction values and one of the second adjacent prediction values, and each of the second weightings is related to one of the predetermined prediction values, one of the first adjacent prediction values and one of the second adjacent prediction values.

**19.** The system for intra prediction in image encoding according to claim 13, wherein the prediction unit includes:

a first predictor for obtaining a plurality of first adjacent prediction values of the target pixels from the first adjacent coding unit according to the first adjacent prediction direction;
a second predictor for obtaining a plurality of second adjacent prediction values of the target pixels from the second adjacent coding unit according to the second adjacent prediction direction; and
a selector for choosing some of the first adjacent prediction values as part of the target prediction values, and choosing some of the second adjacent prediction values as another part of the target prediction values as part of the second adjacent prediction values.

**FIG. 1**

900

D900

B900

B900

T900

B900

FIG. 2

1000

direction unit
110

D11 D12

prediction unit 130

first predictor
131

V11

second
predictor 132

V12

combiner
134

W11,W12

weighting
unit 140

V19

# FIG. 3

Start

Obtain a first adjacent prediction direction of a first adjacent coding unit which is adjacent to the target coding unit ⟶S110

Obtain a second adjacent prediction direction of a second adjacent coding unit which is adjacent to the target coding unit ⟶S120

Obtain a plurality of first adjacent prediction values of the target pixels from the first adjacent coding unit according to the first adjacent prediction direction ⟶S131

Obtain a plurality of second adjacent prediction values of the target pixels from the second adjacent coding unit according to the second adjacent prediction direction ⟶S132 ⟶S130

Obtain each of the target prediction values of the target pixels by combining one of the first adjacent prediction values and one of the second adjacent prediction values ⟶S134

End

# FIG. 4

FIG. 5

FIG. 6

FIG. 7

FIG. 8

2000

```
                    ┌─────────────────┐
                    │ direction unit  │──────────┐
                    │      210        │──────┐   │
                    └─────────────────┘   D11│   │D12
┌───────────────────────────────────────────│───│──────┐
│ prediction unit 230                        │   │      │
│                                            │   │      │
│                    ┌─────────────────┐     │   │      │
│            ┌──────▶│ first predictor │◀────┘   │      │
│            │       │      231        │         │      │
│            │       └─────────────────┘         │      │
│            │                                   │      │
│            │       ┌─────────────────┐         │      │
│            │   ┌──▶│     second      │◀────────┘      │
│            │   │   │  predictor 232  │               │
│            │   │   └─────────────────┘               │
│            │   │                                      │
│            │   │   ┌─────────────────┐                │
│            │   │   │      third      │                │
│        V11 │   │V12│  predictor 233  │                │
│            │   │   └─────────────────┘                │
│            │   │            │ V20                      │
│            │   │            ▼                          │
│            │   │   ┌─────────────────┐   W21,  ┌──────────────┐
│            └───┼──▶│    combiner     │◀──W22,──│  weighting   │
│                └──▶│      234        │   W23   │  unit 140    │
│                    └─────────────────┘         └──────────────┘
│                            │                          │
└────────────────────────────│──────────────────────────┘
                             │
                             └──────▶ V29
```

# FIG. 9

Start

Obtain a first adjacent prediction direction of a
first adjacent coding unit which is adjacent to the
target coding unit ~S210

Obtain a second adjacent prediction direction of
a second adjacent coding unit which is adjacent
to the target coding unit ~S220

Obtain a plurality of predetermined prediction
values of the target pixels from the first adjacent
coding unit or the second adjacent coding unit
according to a predetermined prediction direction ~S233

Obtain a plurality of first adjacent prediction
values of the target pixels from the first adjacent
coding unit according to the first adjacent
prediction direction ~S231

~S230

Obtain a plurality of second adjacent prediction
values of the target pixels from the second
adjacent coding unit according to the second
adjacent prediction direction ~S232

Obtain each of the target prediction values of the
target pixels by combining one of the
predetermined prediction value, one of the first
adjacent prediction values and one of the
second adjacent prediction values ~S234

End

# FIG. 10

FIG. 11

3000

direction unit
310

D11 D12

prediction unit 330

first predictor
331

second
predictor 332

V11

V12

selector
334

V39

# FIG. 12

```
                              ┌─────────┐
                              │  Start  │
                              └────┬────┘
                                   │
                                   ▼
      ┌──────────────────────────────────────────────────────┐
      │   Obtain a first adjacent prediction direction of a   │
      │  first adjacent coding unit which is adjacent to the  │──S310
      │                 target coding unit                    │
      └──────────────────────────┬───────────────────────────┘
                                 │
                                 ▼
      ┌──────────────────────────────────────────────────────┐
      │  Obtain a second adjacent prediction direction of     │
      │  a second adjacent coding unit which is adjacent      │──S320
      │              to the target coding unit                │
      └──────────────────────────┬───────────────────────────┘
```

Obtain a plurality of first adjacent prediction values of the target pixels from the first adjacent coding unit according to the first adjacent prediction direction — S331

Obtain a plurality of second adjacent prediction values of the target pixels from the second adjacent coding unit according to the second adjacent prediction direction — S332 ─ S330

Choose some of the first adjacent prediction values as part of the target prediction values by part of the first adjacent prediction values, and choose some of the second adjacent prediction values as another part of the target prediction values — S334

```
                              ┌─────────┐
                              │   End   │
                              └─────────┘
```

# FIG. 13

FIG. 14

Europäisches
Patentamt

European
Patent Office

Office européen
des brevets

# EUROPEAN SEARCH REPORT

Application Number

EP 18 18 1914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIODERA T ET AL: "CE6 Subset A: Bidirectional intra prediction (JCTVC-C079)", 95. MPEG MEETING; 24-1-2011 - 28-1-2011; DAEGU; (MOTION PICTURE EXPERT GROUP OR ISO/IEC JTC1/SC29/WG11),, no. m18859, 20 January 2011 (2011-01-20), XP030047428, | 1-3, 5-13, 15-19 | INV. H04N19/597 H04N19/11 H04N19/593 |
| Y | * pages 1-3 * * pages 1,2; figures 1-3 * | 4,14 | |
| X | PANUSOPONE K ET AL: "Weighted angular prediction", 6. JVET MEETING; 31-3-2017 - 7-4-2017; HOBART; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-F0104, 4 April 2017 (2017-04-04), XP030150784, | 1,13 | |
| Y | * pages 1,2 * | 4,14 | |

TECHNICAL FIELDS
SEARCHED      (IPC)

H04N

The present search report has been drawn up for all claims

| Place of search | Date of completion of the search | Examiner |
|---|---|---|
| Munich | 20 August 2018 | Di Cagno, Gianluca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    

& : member of the same patent family, corresponding
    document

EPO FORM 1503 03.82 (P04C01)